Europäisches Patentamt

(19) European Patent Office

Office européen des brevets

(11) Numéro de publication: **0 207 920**
**B1**

(12) **FASCICULE DE BREVET EUROPEEN**

(45) Date de publication du fascicule du brevet:
13.12.89

(21) Numéro de dépôt: 86870038.6

(22) Date de dépôt: 26.03.86

(51) Int. Cl.⁴: **C04B 14/28**

(54) Béton présentant de bonnes propriétés de protection contre le feu, élément de construction et procédé de préparation de celui-ci.

(30) Priorité: 05.04.85 BE 648079

(43) Date de publication de la demande:
07.01.87 Bulletin 87/2

(45) Mention de la délivrance du brevet:
13.12.89 Bulletin 89/50

(84) Etats contractants désignés:
AT BE CH DE FR GB IT LI LU NL SE

(56) Documents cités:
FR-A- 1 248 052
FR-A- 1 291 011
FR-A- 2 488 243
FR-A- 2 526 014

(73) Titulaire: CHANTIER BERTRAND SPRL, Rue Magotte 1,
B-4134 Hermalle-sous-Huy Engis(BE)

(72) Inventeur: Bertrand, Maurice, Rue Magotte 1,
B-4134 Hermalle-sous-Huy (Engis)(BE)
Inventeur: Bertrand, Emile, Rue Magotte 1,
B-4134 Hermalle-sous-Huy (Engis)(BE)

(74) Mandataire: van Malderen, Michel et al, p.a.
FREYLINGER & ASSOCIES 85/042 Boulevard de la
Sauvenière, B-4000 Liège(BE)

## Description

La présente invention est relative à un béton, plus particulièrement à un élément de construction en béton qui présente de bonnes caractéristiques de résistance et de protection contre le feu ainsi qu'un procédé de préparation de celui-ci.

Il est bien connu que les bétons classiques comme les bétons siliceux ne présentent qu'une faible résistance au feu et qu'ils éclatent sous l'effet de la chaleur, notamment lorsqu'ils se présentent sous forme d'éléments de construction armés par des éléments d'acier par exemple. Les éléments de construction soumis à une telle sollicitation ne sont plus réutilisables et le bâtiment doit être détruit après l'incendie.

On connaît également des bétons alvéolaires qui présentent une résistance au feu améliorée par rapport aux bétons siliceux.

Les seuls moyens connus jusqu'à présent pour protéger les éléments de construction contre le feu consistent en des revêtements les plus divers.

On a également déjà utilisé des granulats calcaires dans la fabrication du béton, en vue d'en améliorer la résistance au feu et à la corrosion.

Par le document FR-A-1 291 011, on connaît un procédé de préparation d'une pierre artificielle présentant une bonne résistance à la compression. Néanmoins, la composition de béton donnée dans les exemples fait apparaître une quantité d'eau importante et l'utilisation de gravillons d'une granulométrie supérieure à 20 mm. Ce béton que l'on coule ne convient cependant pas comme béton résistant au feu, car il va éclater, notamment à cause de la présence d'eau et de granulats volumineux.

Le document FR-A-2 488 483 (LAFARGE) concerne une composition pour la fabrication de briques isolantes. La composition particulière qui fait appel à beaucoup d'eau et à un matériau fibreux ne convient cependant pas pour la fabrication d'éléments de construction résistant au feu.

Le document FR-A 2 526 014 (J. CHOLLET) est relatif à une composition pour enduit ou mortier assurant une protection contre le feu. Cette composition particulière contenant de la Rhyolite présente en effet une certaine résistance au feu et est destinée à la protection de murs par enduction d'une couche constituée par cette composition.

Le document FR-A 1 248 052 (L. REY) est relatif à un aggloméré contenant de la marne à 98% de calcaire. Ce document ne contient cependant aucune information quant à la résistance au feu.

La présente invention vise à fournir un béton de composition nouvelle qui présente des propriétés améliorées de résistance et de protection contre le feu.

La présente invention est également à fournir un procédé pour la préparation dudit béton, qui permet d'en améliorer encore les propriétés.

Selon la présente invention, le béton contient 5 à 15% de liant hydraulique, 10 à 30% de "sable" d'origine calcaire 0/2, 60 à 80% de gravier lavé 2/7–2/14 le sable d'origine calcaire et le gravier lavé étant constitués de concassés calcaires très purs, contenant moins de 3% d'impuretés calculés en pourcents en poids de la quantité de matières solides introduites, plus l'eau nécessaire au gâchage du ciment constituée par l'eau contenue dans le calcaire et par un ajout d'eau de l'ordre de 2 à 5%, calculé par rapport au poids des matières solides.

Par l'expression "sable" d'origine calcaire on entend un produit de concassage fin à base de calcaire.

Avantageusement, le béton selon l'invention contient encore 0 à 5% de plastifiant tel que du sable jaune ou un pastifiant chimique connu en soi.

La quantité d'eau nécessaire au gâchage du ciment doit être maintenue à un minimum. En effet, il est important d'obtenir une porosité maximum de l'élément de construction, contrairement à la tendance actuelle qui cherche à obtenir des surfaces lisses.

De manière surprenante, la composition de béton selon la présente invention présente, malgré la faible teneur en eau et l'utilisation de gouttelettes de granulométrie très fine, une résistance acceptable à la compression. Ces paramètres distinguent également la composition selon la présente invention de celle décrite dans le document FR-A-1 291 011. En effet, les gravillons d'une dimension de l'ordre de 20 mm et plus ne peuvent convenir pour assurer une résistance au feu analogue à celle de la composition selon la présente invention. En outre, la teneur en eau de la composition décrite dans ce document est notablement plus élevé que dans le cas de l'invention; en effet, une addition d'environ 13% d'eau mène à une teneur en eau dans la composition encore plus élevée, vu la présence d'eau dans le calcaire. Selon l'invention, la teneur en eau globale, c'est-à-dire l'eau liée, l'eau de cristallisation et l'eau libre, est réduite à un minimum de manière à éviter un état pâteux coulable. Pour la préparation de la composition selon l'invention, on ajoute environ 2 à 5 % d'eau seulement.

Selon une forme d'exécution particulièrement avantageuse, on utilise des pierres calcaires lavées qui présentent une teneur en calcaire de l'ordre de 98%, tout matériau pouvant mener à l'éclatement du béton étant essentiellement éliminé. Par ailleurs, la porosité du gravier calcaire est également accrue.

Selon un autre aspect de la présente invention, on prépare le béton décrit ci-dessus en mélangeant les composants solides et l'eau dans un malaxeur en veillant à obtenir un mélange homogène, et sec, non pâteux, qui favorise la porosité du béton obtenu et on le met en forme dans un moule à l'aide d'une presse de manière à laisser subsister 5 à 10 % de vides.

Il faut noter que la mise en oeuvre particulière du béton selon l'invention participe également à l'obtention d'une bonne résistance au feu et d'une protection contre le feu. En effet, le malaxage permet de mieux aérer le mélange de façon à obtenir un élément de construction en béton très poreux. De manière analogue, l'utilisation de la presse pour la mise en forme est plus favorable que l'utilisation d'une table vibrante.

La combinaison des divers points cités, comme la composition du béton et sa mise en oeuvre participent à l'obtention d'éléments de construction résistant au feu et protégeant contre la propagation du feu tout en présentant une résistance mécanique comparable aux éléments en béton classique. En effet, des essais ont montré que des éléments de construction réalisés au moyen du béton et du procédé susmentionnés éclatent sensiblement moins vite au choc thermique, étant donné que le calcaire d'une part et la porosité d'autre part permettent une meilleure dilatation des divers matériaux et une meilleure évacuation de l'eau (liée) dégagée à l'état de vapeur.

Il faut également remarquer que la décomposition chimique du béton à température élevée consomme des calories provenant de l'incendie et dégage du $CO_2$ à l'état gazeux qui empêche la propagation de l'incendie et qui parvient même, dans certains cas, à le circonscrire.

On constate d'ailleurs que l'élément de construction s'est désintégré en surface pour dégager le $CO_2$. Mais cette désintégration n'est pas irréversible et on peut reconstituer le bloc par un revêtement approprié.

On a réalisé l'essai suivant:

On a construit un mur ayant une hauteur de 2,80 m, une largeur de 2,00 m et une épaisseur d'environ 190 mm. Le mur est construit en blocs creux obtenus selon l'invention (dimensions 390 x 190 x 190) qui présentent des ouvertures rectangulaires (135 x 110 mm).

Composition du béton:
- Composants solides en % en poids
+70 % de gravillon calcaire 2/8;
+20 % de gravillon calcaire 0/2 ("sable" provenant des carrières d'Engis à 99 % de $CaCO_3$)
+10 % de ciment CBR HK 4

La résistance à la compression du béton est de 100 kg/cm² (10⁴ Pa). La maçonnerie est réalisée en un mortier dont la composition est la suivante (en pourcents en poids):
62% de sable calcaire
27% de sable jaune
11% de ciment CBR P 30

Le mur est placé devant un four de telle façon qu'il en forme une des parois extérieures. L'essai d'orientation concernant la résistance au feu a été effectué conformément à la norme NBN 713 020, édition 1968 (correspond à ISO 834 et 1973), mais avec une surpression de 20 N/m² ± 5N/m².

Le mur est chargé pendant toute la durée de l'essai d'une charge linéaire, verticale et constante ± 196 kN/m.

Des taches d'humidité apparaissent à la surface du mur à divers moments; des fumées se dégagent jusqu'à 147 minutes; à 239 minutes, on constate une augmentation moyenne de la température de 140°C (fin de l'isolation).

On a arrêté l'essai étant donné que le critère de la norme (isolation) était atteint. Néanmoins, la stabilité et l'étanchéité aux flammes du mur auraient permis de poursuivre l'essai de la tenue au feu. Toutefois, en respectant la norme, bien que pas appropriée, on atteint une résistance au feu très élevée (242 minutes) non encore atteinte jusqu'à présent.

L'essai montre bien la supériorité des éléments de construction selon la présente invention.

## Revendications

1. Béton contenant du "sable" calcaire des gravillons de deux granulométries différentes, du liant hydraulique et de l'eau, caractérisé en ce qu'il contient 5 à 15% de liant hydraulique, 10 à 30% de "sable" d'origine calcaire 0/2, 60 à 80% de gravier lavé 2/7–2/14, le "sable" d'origine calcaire et le gravier lavé étant des concassés calcaires très purs, contenant moins de 3% d'impuretés, calculés en pourcent en poids de la quantité de matières solides introduites, plus l'eau nécessaire au gâchage du ciment constituée par l'eau contenue dans le calcaire et par un ajout d'eau de l'ordre de 2 à 5%, calculé par rapport au poids des matières solides.

2. Béton selon la revendication 1, caractérisé en ce qu'il contient encore 0 à 5% en poids de plastifiant, de préférence du sable jaune ou un plastifiant chimique connu en soi, calculé par rapport à la quantité de matières solides engagées.

3. Béton selon l'une quelconque des revendications 1 ou 2, caractérisé en ce que le liant hydraulique est un ciment du type CBR HK 40.

4. Procédé pour la mise en œuvre d'un béton selon l'une quelconque des revendications précédentes caractérisé en ce qu'on mélange les composants solides et l'eau dans un malaxeur en veillant à obtenir un mélange homogène, aéré et sec (non pâteux) et en ce qu'on le met en forme dans un moule au moyen d'une presse éventuellement vibrante de manière à laisser subsister 5 à 10% de vides.

5. Elément de construction en béton selon l'une quelconque des revendications 1 à 3 et mis en œuvre selon la revendication 4.

## Patentansprüche

1. Beton aus kalksteinhaltigem "Sand", Kies von zwei verschiedenen Kornabstufungen, hydraulischem Bindemittel und Wasser, dadurch gekennzeichnet, daß er zusammengesetzt ist aus 5 bis 15% hydraulischem Bindemittel, 10 bis 30% kalksteinhaltigem "Sand" 0/2, 60 bis 80% gewaschenem Kies 2/7–2/14, wobei der kalksteinhaltige "Sand" und der gewaschene Kies aus sehr reinem gebrochenem Kalkstein mit weniger als 3 Gewichtsprozent Verunreinigungen, bezogen auf die zugegebenen Feststoffe, bestehen, sowie aus dem zum Anrühren des Zements erforderlichen Wasser, das gebildet wird von dem in dem Kalkstein enthaltenen Wasser und von ungefähr 2 bis 5 Gewichtsprozent zusätzlichem Wasser, bezogen auf die Feststoffe.

2. Beton gemäß Anspruch 1, dadurch gekennzeichnet, daß er außerdem 0 bis 5 Gewichtsprozent Plastifizierungsmittel, bezogen auf die zugegebenen Feststoffe, enthält, vorzugsweise gelben Sand oder ein an sich bekanntes chemisches Plastifizierungsmittel.

3. Beton gemäß irgendeinem der Ansprüche 1 oder 2, dadurch gekennzeichnet, daß das hydraulische Bindemittel Zement vom Typ CBR HK 40 ist.

4. Verfahren zur Verarbeitung von Beton mit einer Zusammensetzung gemäß irgendeinem der vorhergehenden Ansprüche, dadurch gekennzeichnet, daß die festen Bestandteile und das Wasser in einem Mischer gemischt werden, wobei darauf geachtet wird, daß ein homogenes, lufthaltiges und trockenes (nicht pastenartiges) Gemisch erhalten wird, und daß dieses Gemisch mittels einer eventuell vibrierenden Presse so in eine Gießform eingebracht wird, daß 5 bis 10% Hohlräume zurückbleiben.

5. Konstruktionselement aus Beton gemäß irgendeinem der Ansprüche 1 bis 3, der gemäß Anspruch 4 verarbeitet wurde.

**Claims**

1. Concrete containing lime "sand", chippings of two different particle sizes, hydraulic binder and water, characterized in that it contains 5 to 15% of hydraulic binder, 10 to 30% of 0/2 "sand" of limestone origin, 60 to 80% of 2/7–2/14 washed gravel, the "sand" of limestone origin and the washed gravel being very pure limestone chippings containing less than 3% of impurities, the contents being calculated as percentages by weight of the amount of solid matter introduced, plus the water needed for mixing the cement, consisting of the water present in the limestone and of an addition of water of the order of 2 to 5%, calculated relative to the weight of solid matter.

2. Concrete according to Claim 1, characterized in that it also contains 0 to 5% by weight of plasticizer, preferably yellow sand or a chemical plasticizer known per se, calculated relative to the amount of solid matter introduced.

3. Concrete according to either of Claims 1 and 2, characterized in that the hydraulic binder is a CBR HK 40 type cement.

4. Process for using a concrete according to any one of the preceding claims, characterized in that the solid components and water are mixed in a mixer while taking care to obtain a homogeneous, consistency aerated and dry (non-pastry) mixture, and in that it is shaped in a mould by means of a press, optionally of the vibrating type, so as to leave 5 to 10% of pockets remaining.

5. Structural unit made of concrete according to any one of Claims 1 to 3 and used according to Claim 4.